# FASCICULE DE BREVET EUROPEEN

(11) **EP 0 382 613 B1**
(45) Date de publication et mention de la délivrance du brevet: **29.12.1993**
(21) Numéro de dépôt: 90400295.3
(22) Date de dépôt: 02.02.1990
(51) Int. Cl.: G02B 6/36, G02B 26/02

(54) **Dispositif mécano-optique, notamment joint tournant optique**
Mechanisch-optische Vorrichtung für eine drehbare optische Verbindung
Mechanical optical device for a revolving optical joint

(30) Priorité: 09.02.1989 FR 8901709
(43) Date de publication de la demande: 16.08.1990
(73) Titulaire: DASSAULT ELECTRONIQUE, F-92214 Saint-Cloud (FR)
(72) Inventeur: Guinard, Maurice, F-92210 Saint-Cloud (FR)
(74) Mandataire: Plaçais, Jean-Yves

(56) Documents cités:
- EP-A- 0 111 390
- EP-A- 0 156 124
- EP-A- 0 218 739
- FR-A- 2 581 204
- US-A- 4 589 726

## Description

L'invention concerne le raccordement optique, par un même faisceau lumineux, de deux points susceptibles d'occuper des positions relatives différentes.

Elle vise avantageusement, mais non limitativement, les dispositifs mécano-optiques destinés à diriger un faisceau lumineux issu d'au moins une fibre optique vers au moins une autre fibre optique susceptible d'occuper au moins deux positions différentes relativement à la première.

Certains de ces dispositifs sont destinés à assurer une commutation entre au moins une fibre optique dite "d'entrée" et plusieurs fibres optiques dites "de sortie", fixes les unes par rapport aux autres. On les dénomme alors généralement des "commutateurs". Ceux plus particulièrement capables d'effectuer cette commutation cycliquement à une vitesse choisie sont dénommés des "commutateurs distributeurs".

D'autres dispositifs sont utilisés en tant que "joints tournants optiques" pour diriger le faisceau lumineux issu d'au moins une fibre optique d'entrée fixe vers au moins une fibre optique de sortie mobile en rotation à une vitesse donnée relativement à la fibre d'entrée. Des joints tournants optiques sont décrits notamment dans EP-A-156124 et EP-A-111390.

Un inconvénient des dispositifs actuels, notamment des joints tournants, réside dans les pertes d'insertion, c'est-à-dire la perte d'au moins une partie de l'énergie lumineuse véhiculée par le faisceau lumineux présent au sein de la fibre optique d'entrée, pendant son trajet vers la fibre optique de sortie, et ce en raison de la variation de la position relative de cette dernière. Ces pertes d'insertion peuvent nécessiter parfois l'utilisation de moyens amplificateurs des signaux sortant des joints tournants.

L'invention vient apporter une solution plus satisfaisante à ce problème.

Un but de l'invention est de proposer un dispositif mécanoptique 5 capable de raccorder aussi précisément que possible, par un même faisceau lumineux, deux points susceptibles de présenter deux positions relatives différentes.

L'invention a aussi pour but de minimiser les pertes d'insertion dans les dispositifs mécano-optiques à fibres optiques, notamment dans les joints tournants.

Un autre but de l'invention est de proposer un commutateur et un commutateur distributeur simples à réaliser.

L'invention a encore pour but de proposer un joint tournant possédant plusieurs fibres d'entrée et de sortie, simple à réaliser, et à pertes minimales.

L'invention s'applique à un dispositif mécano-optique, dont le support ou bâti est destiné à recevoir au moins un faisceau incident sensiblement parallèle, d'axe d'incidence connu, provenant par exemple d'une fibre optique.

Il est connu (US-A-4 589 726) de prévoir un dispositif mécano-optique, comprenant un support, un élément formant dièdre réflecteur, sensiblement droit, mobile à rotation relativement au support, autour d'un axe de rotation sensiblement contenu dans le plan bissecteur du dièdre, et sensiblement orthogonal à son arête, des moyens d'entrée pour appliquer à l'élément formant dièdre au moins un faisceau incident sensiblement parallèle, selon un axe d'incidence situé du côté de sa concavité réfléchissante, de sorte qu'il se produit une double réflexion du faisceau incident, et des moyens de sortie pour recueillir le faisceau ayant subi cette double réflexion comme faisceau de sortie.

Selon l'invention, lesdits moyens d'entrée sont agencés de façon que ledit faisceau incident soit appliqué sur ledit dièdre selon un axe d'incidence s'étendant selon une génératrice d'un premier cône de révolution autour de cet axe de rotation, donnant ainsi lieu à un faisceau réfléchi par la concavité réfléchissante qui s'étend le long d'une génératrice d'un deuxième cône de révolution autour dudit axe de rotation, les sommets respectifs des deux cônes étant symétriques par rapport à l'arête de l'élément formant dièdre. et lesdits moyens de sortie sont agencés de façon à recueillir ledit faisceau ainsi réfléchi par ledit dièdre le long d'une génératrice dudit deuxième cône de revolution.

L'invention utilise l'observation que les deux surfaces de révolution ainsi définies vont permettre, avec des aménagements convenables, d'apporter une solution au problème posé.

D'autres avantages et caractéristiques de l'invention apparaîtront à l'examen de la description détaillée et des dessins annexés, sur lesquels :
- les figures 1 et 2 illustrent respectivement une coupe longitudinale et une vue de dessus partielles d'un dispositif illustratif de l'état de la technique, utilisable notamment comme commutateur,
- les figures 3, 4 et 5 illustrent un premier mode de réalisation d'un dispositif selon l'invention, utilisable notamment comme commutateur distributeur,
- les figures 6, 7 et 8 illustrent un deuxième mode de réalisation d'un dispositif selon l'invention, utilisable notamment également comme commutateur distributeur,
- la figure 9 illustre un troisième mode de réalisation d'un dispositif selon l'invention, utilisable comme joint tournant optique,
- la figure 10 illustre un quatrième mode de réalisation d'un dispositif selon l'invention, également utilisable comme joint tournant optique,
- les figures 11, 12 et 13 illustrent un principe général illustratif de l'état de la technique, selon lequel la première surface de révolution est un cylindre,
- les figures 14, 15 et 16 illustrent le principe général de l'invention selon lequel la première surface de révolution est un cône, et
- les figures 17 et 18 illustrent un cinquième mode de réalisation d'un dispositif selon l'invention, également utilisable comme joint tournant optique.

Les dessins comportent pour l'essentiel des éléments géométriques de caractère certain. A ce titre, ils font partie intégrante de la description et pourront non seulement servir à mieux faire comprendre la description détaillée ci-après, mais aussi contribuer, le cas échéant, à la définition de l'invention.

Les éléments du dispositif mécano-optique portent des références affectées d'un suffixe égal au numéro du mode de réalisation décrit. Les éléments analogues ou ayant une fonction analogue dans plusieurs modes de réalisation portent la même référence. Lorsque ces éléments sont évoqués d'une manière générale, les suffixes correspondant aux différents modes de réalisation sont supprimés.

Les cotes ainsi que les indications numériques indiquées ci-après ne sont données qu'à titre d'exemple et ne sont pas limitatives.

Un élément important du dispositif mécano-optique est un bloc optique 2 constitué d'un matériau transparent 24 qui est par exemple un verre, d'indice de réfraction adapté à la longueur d'onde des faisceaux lumineux le traversant, par exemple 1,5.

Ce bloc optique comprend un prisme droit dont la base est un triangle isocèle droit. Les deux faces orthogonales 21 et 22 de ce prisme définissent un élément formant dièdre droit 20, plus simplement dénommé par la suite dièdre droit.

Ce bloc optique possède un premier plan de symétrie, constitué par le plan bissecteur du dièdre, et, avantageusement, un deuxième plan de symétrie, constitué par son plan médian perpendiculaire au plan bissecteur. Ces deux plans de symétrie définissent ainsi pour le bloc optique, et par conséquent pour le dièdre, un axe de symétrie 4.

Les deux faces 21 et 22 sont métallisées pour leur conférer des propriétés de réflexion totale.

D'une façon générale, ces deux faces 21 et 22, réfléchissantes, se rejoignant pour former l'arête 23 du dièdre, forment la concavité réfléchissante d'un dièdre réflecteur symétrique et droit 20.

Bien entendu, le caractère symétrique et droit s'entend aux imprécisions de fabrication près.

Le prisme droit se raccorde à un corps de révolution 28 autour de l'axe de symétrie 4 et le bloc optique ainsi constitué 2 est fixé à l'intérieur d'une douille cylindrique 3 montée tournante, sur roulement à billes 6, dans un support 1, autour d'un axe de rotation 4 sensiblement confondu avec l'axe de symétrie du dièdre.

Ce prisme droit 20 est destiné à recevoir au moins un faisceau incident sensiblement parallèle 8, d'axe d'incidence connu. Le dièdre, mobile à rotation relativement au support, autour de l'axe de rotation 4, est positionné dans la douille de sorte que sa concavité réfléchissante soit tournée vers le faisceau incident pour autoriser une double réflexion de ce dernier donnant naissance à un faisceau réfléchi 9.

Selon une caractéristique générale de l'invention, l'optique d'entrée génératrice du faisceau incident 8 est positionnée dans le support 1 de sorte que l'axe d'incidence du faisceau incident s'étende le long d'une génératrice d'une première surface de révolution autour de l'axe de rotation 4, quelle que soit la position relative du dièdre et du support. Cette première surface de révolution est un cylindre selon l'état de la technique ou bien un cône selon l'invention.

Le faisceau réfléchi 9 s'étend alors le long d'une génératrice d'une deuxième surface de révolution autour de l'axe de rotation 4.

Selon l'état de la technique, les première et deuxième surfaces de révolution peuvent être un même cylindre.

Selon l'invention, elles sont deux cônes, dont les sommets sont symétriques par rapport à l'arête 23 du dièdre 20.

La Demanderesse a en effet constaté que l'utilisation d'un tel dièdre, mobile à rotation sensiblement autour de son axe de rotation, combinée avec un positionnement particulier de l'axe d'incidence par rapport audit axe de rotation, contribuait à atteindre les buts de la présente invention.

La Demanderesse a notamment remarqué que :
si le dièdre est mobile entre une première position et une deuxième position, espacée de la première d'un angle orienté choisi a0, et si le faisceau incident (ou le faisceau réfléchi) reste au même emplacement sur sa propre surface de révolution dans les deux positions du dièdre,
alors le faisceau réfléchi (respectivement le faisceau incident) prend, sur sa propre surface de révolution, deux emplacements respectivement associés auxdites première et deuxième positions du dièdre, le deuxième emplacement étant décalé du premier d'un angle orienté al égal au double dudit angle orienté choisi a0.

Afin de déplacer la douille 3, et par conséquent le dièdre, en rotation autour de l'axe 4, le dispositif comporte des moyens moteurs 5 dont un élément consiste en un pignon denté 50 situé sur le pourtour de la douille 3 et faisant partie d'un engrenage commandé.

D'une façon générale, le dispositif mécano-optique peut comprendre en outre :
- une optique d'entrée, pour appliquer au moins un faisceau d'entrée destiné à fournir ledit comme faisceau incident audit dièdre, selon ledit axe d'incidence, le faisceau d'entrée possédant un axe d'entrée situé sur une surface d'entrée correspondant à ladite première surface de révolution, et
- une optique de sortie pour délivrer au moins un faisceau de sortie à partir du faisceau réfléchi par le dièdre, le faisceau de sortie possédant un axe de sortie situé sur une surface de sortie correspondant à ladite deuxième surface de révolution.

L'utilisation d'un bloc optique permet que les optiques d'entrée et de sortie comprennent en outre une partie de ce bloc optique (à savoir, par exemple, les dioptres d'entrée et sortie effectuant une déviation appropriée, ou bien des portions réfléchissantes additionnelles s'effectuant des reflexions secondaires appropriées.

En correspondance avec l'un des faisceaux incident et réfléchi, le faisceau d'entrée (ou de sortie) reste au même endroit sur sa propre surface, dans les première et deuxième positions du dièdre, tandis que le faisceau de sortie (respectivement d'entrée) occupe sur sa propre surface deux endroits correspondant respectivement auxdites première et deuxième positions du dièdre.

Bien entendu, si la surface d'entrée est une surface de révolution autour de l'axe de rotation 4, et ayant l'axe d'entrée pour génératrice, et si la surface de sortie est également une surface de révolution autour de cet axe de rotation, ayant l'axe de sortie pour génératrice, le deuxième endroit est alors décalé du premier d'un angle orienté al égal à deux fois l'angle orienté choisi a0.

Dans les modes de réalisation décrits ici, le faisceau d'entrée est issu d'une fibre optique 7 d'un diamètre d'environ 50 micromètres et le faisceau de sortie pénètre également dans une fibre optique 7 de même diamètre. Il est alors prévu que ces fibres optiques d'entrée (respectivement de sortie) soient solidarisées du support 1 par l'intermédiaire d'organes d'entrée 70 (respectivement de sortie 71), ou embouts, insérés dans des passages cylindriques d'un diamètre égal à environ 10 mm. Afin que le faisceau lumineux issu de la fibre optique d'entrée soit sensiblement parallèle, voire légèrement convergent, on munit l'embout d'entrée 70 d'un collimateur approprié 700. Le faisceau lumineux d'entrée a alors un diamètre de 0,1 mm à la sortie du collimateur.

Il est également avantageux de munir l'embout de sortie 71 d'un collimateur 710 qui, si on appliquait à son entrée un faisceau lumineux issu de la fibre optique 7, produirait à sa sortie un faisceau lumineux d'un diamètre de 0,5 mm environ. Ainsi, lorsque le faisceau lumineux de diamètre 0,1 mm issu du collimateur d'entrée 700, aura traversé le bloc optique pour pénétrer dans le collimateur de sortie 710 (par la "sortie" de ce dernier), il convergera nécessairement vers le coeur de la fibre optique de sortie.

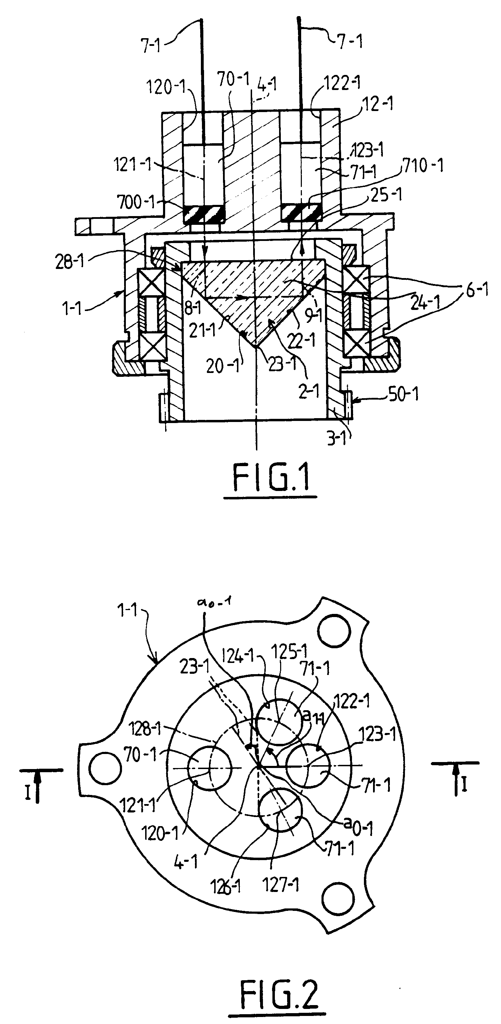

On se réfère maintenant plus particulièrement aux figures 1 et 2 pour un dispositif illustratif de l'état de la technique.

Le corps de révolution 28-1 du bloc optique 2-1 est une partie cylindrique droite. La hauteur du triangle du prisme droit est égale à environ 20 mm et la hauteur du prisme droit, qui est en fait le diamètre de cette partie cylindrique, est égale à environ 35 mm.

La surface plane 25-1 de la partie cylindrique 28-1, opposée à l'arête du dièdre, forme un dioptre discoïdal plan entre le matériau transparent et l'air, sensiblement perpendiculaire à l'axe de rotation.

Le support 1-1 comporte un bossage cylindrique 12-1, située en regard du dioptre plan 25-1. Dans ce bossage cylindrique 12-1 sont ménagés quatre passages cylindriques 120-1, 122-1, 124-1, 126-1 débouchant du côté de la concavité réfléchissante du dièdre. Les axes respectifs de ces passages, 121-1, 123-1, 125-1 et 127-1 sont disposés sur un cylindre 128-1, d'un diamètre égal à environ 25 mm. Ce cylindre constitue, comme on le verra ci-après, à la fois les première et deuxième surfaces de révolution ainsi que les surfaces d'entrée et de sortie.

Deux de ces axes, 121-1 et 123-1 sont disposés symétriquement par rapport à l'axe de rotation 4-1; le troisième axe (125-1) est décalé angulairement d'un angle orienté choisi a1-1 égal à 60° compté, depuis la droite reliant les deux axes symétriques 121-1 et 123-1, dans le sens trigonométrique (sens inverse des aiguilles d'une montre). Le quatrième axe 127-1 est disposé symétriquement au troisième axe par rapport à la droite reliant les deux axes symétriques 121-1 et 123-1.

On supposera ici que l'axe d'entrée du faisceau d'entrée est l'axe 121-1 et que les trois autres axes sont susceptibles de constituer un axe de sortie pour le faisceau de sortie.

Le dièdre 20-1 est susceptible d'occuper trois positions. La première est celle représentée sur les figures 1 et 2, dans laquelle le plan bissecteur forme plan de symétrie pour les deux axes 121-1 et 123-1 (arête représentée en pointillé sur la figure 2).

La deuxième est décalée par rapport à la première d'un angle orienté a0-1 égal à la moitié de l'angle orienté a1-1 (arête représentée en trait mixte sur la figure 2).

La troisième est décalée de la première d'un angle orienté égal à l'inverse de la moitié de l'angle orienté a1-1.

Le fonctionnement de ce dispositif sera décrit en détail ci-après.

Il convient cependant de remarquer que la structure de ce dispositif, présentant deux passages symétriquement disposés par rapport à l'axe de rotation, peut se généraliser. En effet, quand le bossage comporte trois passages, ceux-ci doivent être agencés pour que, dans la première position du dièdre, le plan bissecteur de celui-ci constitue un plan de symétrie pour deux axes respectifs d'un premier et d'un deuxième passage. L'axe du troisième passage est alors décalé de l'axe du deuxième passage d'un angle orienté a1 sensiblement égal à deux fois l'angle orienté choisi a0, de sorte que, dans la deuxième position du dièdre, le plan bissecteur de celui-ci constitue un plan de symétrie pour les axes des premier et troisième passages.

Plus généralement encore, quel que soit le mode de réalisation d'un dispositif utilisé comme commutateur ou commutateur distributeur, le support comporte au moins un premier et un deuxième passage fixes, agencés pour que, dans la première position du dièdre, l'axe de l'un de ces deux passages constitue ledit axe d'entrée, l'axe de l'autre passage constituant ledit axe de sortie, ainsi qu'un troisième passage fixe dont l'axe est décalé de l'axe du deuxième passage d'un angle orienté a1 égal sensiblement au double de l'angle orienté choisi a0, de sorte que l'un des axes des premier et troisième passages constitue, dans la deuxième positiion du dièdre, ledit axe d'entrée, l'autre axe constituant ledit axe de sortie.

Si le dispositif est un joint tournant optique, on verra alors ci-après que, quel que soit le mode de réalisation, le dièdre est susceptible d'être déplacé continûment par rapport au support avec une vitesse angulaire algébrique choisie v0. Le terme "algébrique" évoque ici non seulement la valeur mais aussi le sens de la vitesse. Le support comporte alors une première et une deuxième partie, possédant chacune au moins un passage. L'une des première et deuxième parties est fixe dans le support tandis que l'autre est déplacée continûment relativement à celui-ci, avec une vitesse angulaire algébrique v1, sensiblement égale au double de la vitesse angulaire algébrique choisie v0. Le dièdre est alors positionné dans le support pour assurer une correspondance optique entre le(s) passage(s) de la première partie et le(s) passage(s) de la deuxième partie, quelle que soit la position de ce dièdre, de sorte qu'un faisceau lumineux entre par le passage d'une des deux parties et sort par le passage de l'autre partie.

La structure de certains dispositifs mécano-optiques selon l'invention peut être encore plus complexe. Ainsi, l'une des deux optiques d'entrée et de sortie peut comprendre en outre des moyens de réflexion secondaire tournés vers la concavité réfléchissante du dièdre et coopérant avec elle pour l'un des faisceaux incident et réfléchi, respectivement. Le terme "secondaire" s'oppose ici à la double réflexion "principale" sur le dièdre.

L'optique d'entrée (respectivement de sortie) peut comprendre également des premiers (respectivement des deuxièmes) moyens de déviation de faisceau lumineux.

On peut trouver ce type de structure aussi bien dans le cas d'un commutateur que dans le cas d'un joint tournant lorsque au moins un passage pour un faisceau d'entrée (ou de sortie) débouche du côté de la concavité réfléchissante du dièdre (ou de l'autre côté),
et lorsque le passage optiquement correspondant pour le faisceau de sortie (respectivement d'entrée) débouche du côté de la surface convexe du dièdre (respectivement du côté de la concavité réfléchissante).

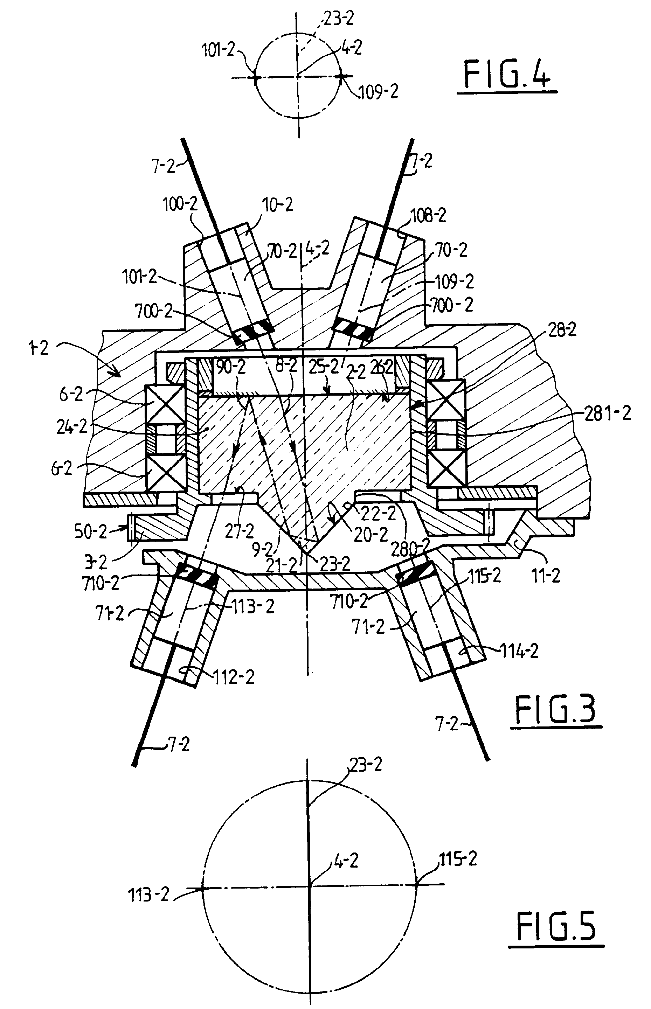

Les modes de réalisation du dispositif selon l'invention présentent au moins partiellement des structures de ce type comme on peut le voir sur les figures 3 à 10 et 17, 18.

Dans chacun des premier, deuxième, troisième, et quatrième modes, la première partie 10 (fixe ou mobile) du support 1 comporte deux passages 100 et 108, débouchant du côté de la concavité réfléchissante du dièdre, et dont les axes respectifs 101 et 109 sont disposés symétriquement par rapport à l'axe de rotation 4. Ces deux axes constituent ici par exemple deux axes d'entrée pour deux faisceaux d'entrée différents.

Sur la deuxième partie fixe 11 du support 1, sont ménagés deux passages 112 et 114, débouchant du côté convexe du dièdre et possédant respectivement deux axes 113 et 115 symétriques par rapport à l'axe de rotation 4. Ces deux axes constituent ici alors deux axes de sortie pour les deux faisceaux de sortie.

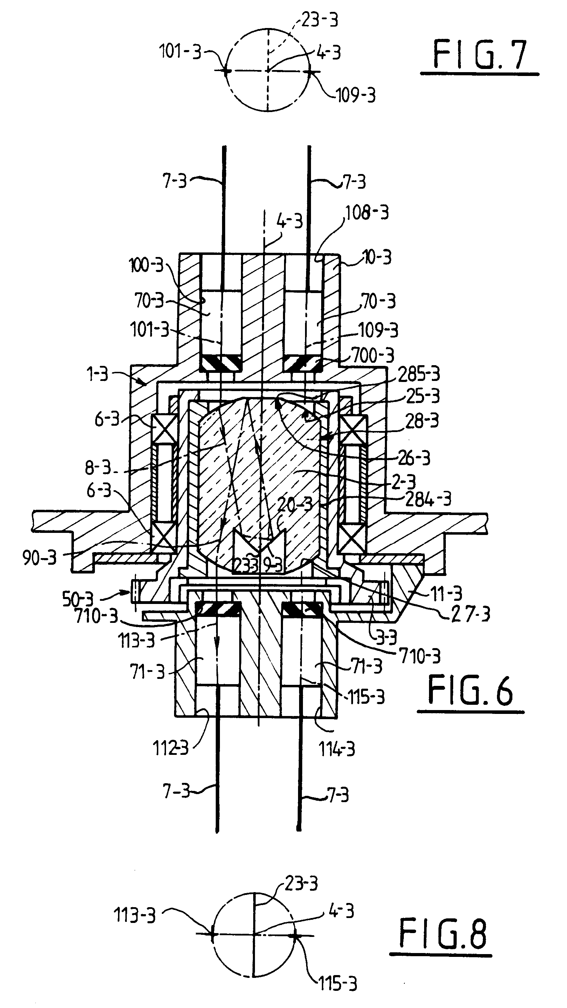

Les figures 4 et 7 montrent schématiquement, vues de dessus, les traces des axes des passages 100 et 108, et les figures 5 et 8 montrent schématiquement, vues de dessus, les traces des axes des passages 112 et 114.

Les faisceaux incident sur le dièdre et réfléchi par le dièdre sont inclinés par rapport à l'axe de rotation 4 pour que le faisceau lumineux puisse passer d'un passage d'entrée à un passage de sortie. La Demanderesse a envisagé deux possibilités pour réaliser cette condition. La première consiste à incliner directement les faisceaux d'entrée et de sortie. La deuxième consiste à utiliser les moyens de déviation si les faisceaux d'entrée et de sortie sont parallèles à l'axe de rotation.

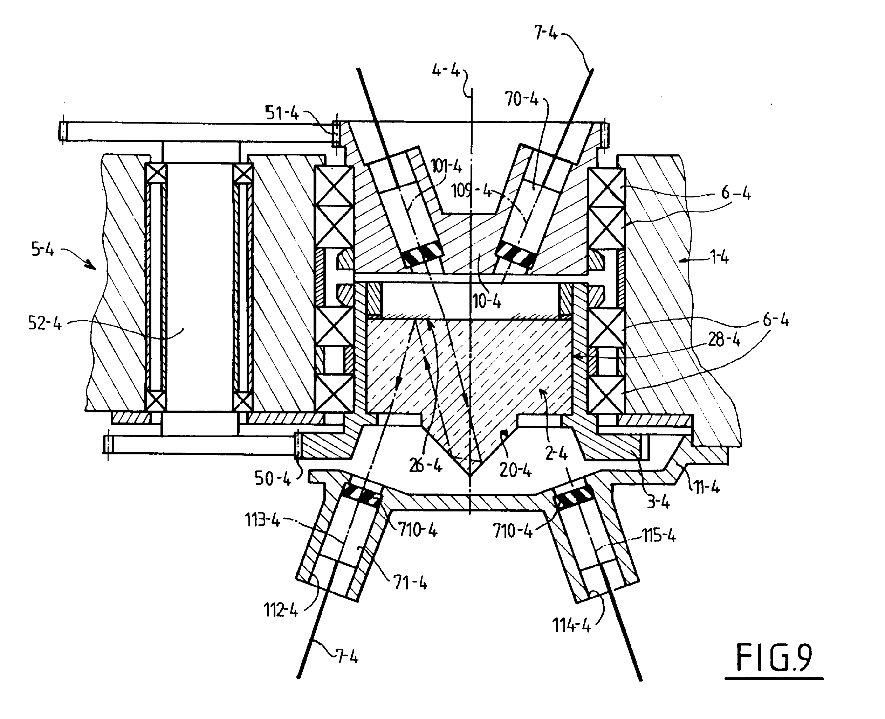

Dans les premier et troisième modes de réalisation (figures 3 et 9), les axes d'entrée sont situés sur un cône de révolution de demi-angle au sommet d'environ 10° et les deux axes de sortie sont situés sur un cône de même demi-angle au sommet mais renversé par rapport au premier.

Le bloc optique 2 est le même pour ces deux modes de réalisation. On le décrira donc uniquement pour le premier, en se référant plus précisément à la figure 3.

Le corps de révolution 28-2 comporte une première partie cylindrique 280-2, raccordée au prisme droit, dont le diamètre, égal à la hauteur de ce prisme droit, est sensiblement égal à 25 mm. Cette première partie cylindrique 280-2 se prolonge par une deuxième partie cylindrique 281-2 dont le diamètre est égal à environ 55 mm et dont la hauteur est égale à 25 mm.

La partie inférieure du cylindre 281-2 raccordée au cylindre 280-2, située au voisinage de la concavité réfléchissante du dièdre, forme un anneau 27-2 constituant un dioptre plan entre le matériau transparent du bloc optique et l'air. La face plane supérieure du cylindre 281-2 est partiellement métallisée pour former un miroir réfléchissant annulaire 26-2 tourné vers la concavité réfléchissante du dièdre. Le disque central de la face supérieure du cylindre 281-2, interne au miroir annulaire, constitue alors un autre dioptre plan 25-2 entre le matériau transparent du bloc optique et l'air.

On remarque alors qu'un faisceau entrant ou sortant dans le bloc optique par l'intermédiaire des différents dioptres plans subit une réfraction d'un angle égal à environ 5°. On peut alors considérer que ces derniers constituent également dans ces deux modes de réalisation les moyens de déviation de faisceau lumineux bien que cette déviation soit minime en raison de l'inclinaison des faisceaux d'entrée et de sortie. De même, le miroir annulaire 26-2 constitue les moyens de réflexion secondaire.

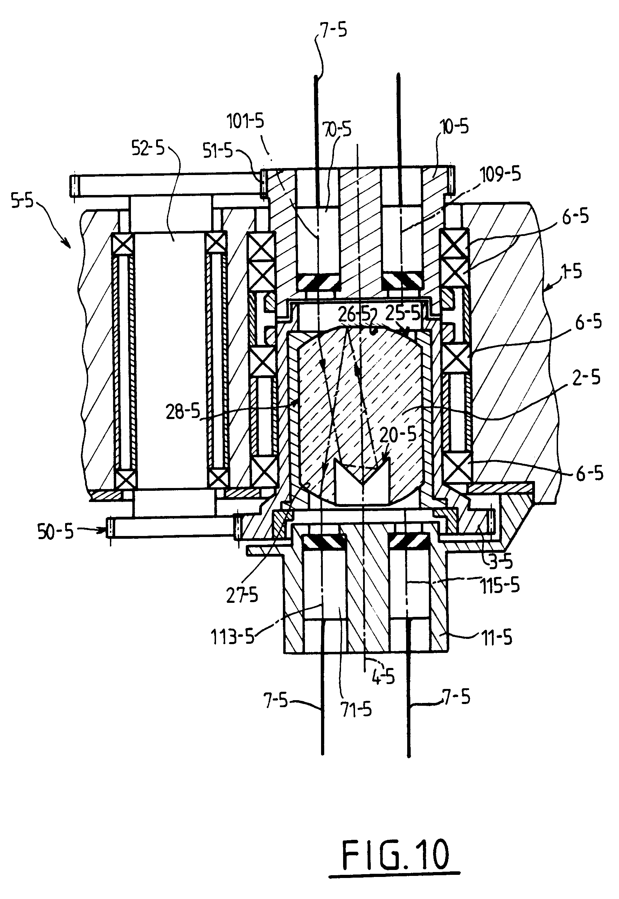

Dans les deuxième et quatrième modes de réalisation (figures 6 et 10), les axes 101, 109, 113, 115 des passages correspondants sont disposés selon un même cylindre d'un diamètre égal à environ 20 mm. Le bloc optique 2 présente alors une structure différente afin d'autoriser le passage d'un faisceau lumineux depuis la première partie 10 jusqu'à la deuxième partie 11. Sa structure, commune à ces deux modes de réalisation, ne sera décrite qu'en se référant plus particulièrement à la figure 6.

Le corps de révolution 28-3 possède une partie centrale cylindrique 284-3 et une première extrémité discoïdale 285-3, opposée à la concavité réfléchissante, d'un diamètre égal à environ 10 mm, et formant, par métallisation, les moyens de réflexion secondaire 26-3. La partie centrale cylindrique se raccorde à la partie discoïdale par l'intermédiaire d'une surface courbe 25-3 formant un dioptre entre le matériau transparent et l'air. Le bloc optique présente en outre une autre surface courbe 27-3 opposée à la surface courbe 25-3, située en regard des passages 112 et 114, et permettant le raccord de la partie cylindrique 284-3 au prisme droit. Cette surface courbe 27-3 forme un autre dioptre entre le matériau transparent et l'air. Les dioptres courbes forment donc ici les moyens de déviation du faisceau lumineux.

Les premier et deuxième modes de réalisation du dispositif selon l'invention peuvent être utilisés en tant que commutateurs distributeurs. Ils possèdent donc tous deux, par exemple, une première partie 10 fixe dans le support 1 (la seconde partie 11 étant fixe dans tous les modes de réalisation).

On peut alors définir deux positions remarquables du dièdre. Dans la première, le plan bissecteur de celui-ci constitue un plan de symétrie pour les axes des deux passages 100 et 108 ainsi que pour les deux passages 112 et 114. Dans la deuxième position, le plan bissecteur contient les axes des quatre passages. L'angle orienté choisi a0 est donc égal ici à π/2 radians.

Les troisième et quatrième modes de réalisation du dispositif peuvent être utilisés en tant que joint tournant. Ils possèdent donc tous deux, par exemple, une première partie 10 mobile par rapport au support. Cet aménagement commun sera décrit uniquement en se référant au troisième mode de réalisation représenté sur la figure 9.

La première partie 10-4, cylindrique, est mobile à rotation autour de l'axe de rotation 4-4 sur des roulements à billes 6-4 et possède, sur son pourtour, un pignon denté 51-4. Il est nécessaire que cette première partie tourne de façon synchronisée avec la douille 3-4, donc avec le dièdre, dans le même sens et avec une vitesse double de celle du dièdre. Aussi, les moyens moteurs 5-4 comprennent-ils un réducteur de vitesse à engrenage 52-4 coopérant avec les pignons dentés 50-4 et 51-4.

Le dièdre est positionné de telle sorte que son plan bissecteur constitue, lorsque le joint tournant est arrêté dans une position particulière, un plan de symétrie pour les deux axes d'entrée et les deux axes de sortie.

On va maintenant décrire en détail le fonctionnement du dispositif selon l'état de la technique, ainsi que celui des différents modes de réalisation du dispositif selon l'invention.

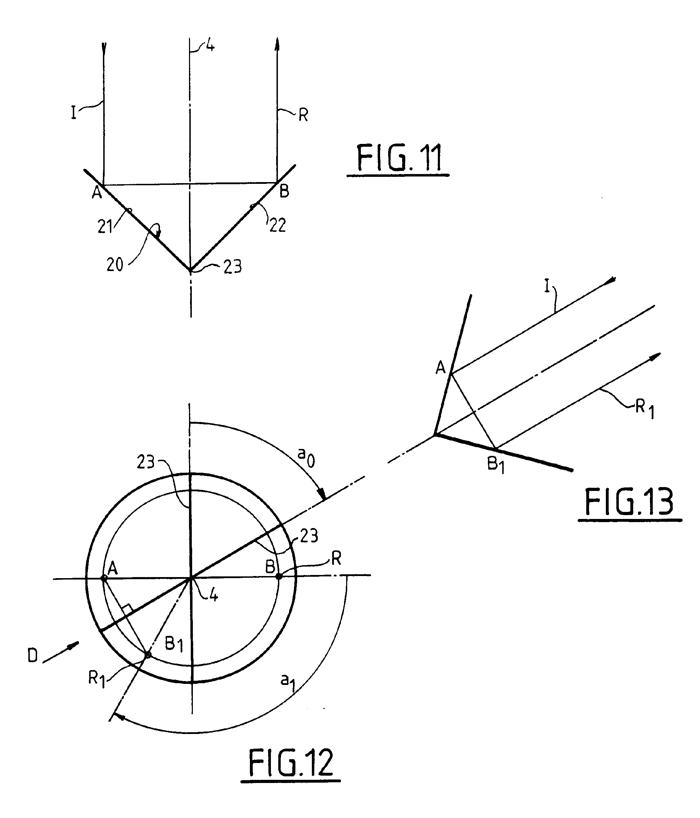

Ce fonctionnement repose sur une constatation qui est illustrée dans deux cas particuliers sur les figures 11 à 16. La figure 11 (respectivement 14) est une vue schématique en plan du dièdre 20, la figure 12 (respectivement 15) est une vue de dessus correspondant à la vue en plan et la figure 13 (respectivement 16) est une vue en plan suivant la flèche D correspondant à la vue de dessus.

On considère tout d'abord le cas selon l'état de la technique où la première surface de révolution (le long d'une generatrice de laquelle s'étend le faisceau incident sur le dièdre) est un cylindre (figures 11, 12, 13).

Un faisceau incident I frappe la face réfléchissante 21 au point A, se réfléchit sur la deuxième face 22 au point B et donne naissance à un faisceau réfléchi R. Dans cette première position, l'arête 23 est représentée sur la figure 11, perpendiculaire à la planche.

Dans une deuxième position, le dièdre tourne d'un angle orienté a0 de sorte que l'arête 23 soit inclinée comme représenté sur la figure 12. Dans cette deuxième position, le faisceau incident I, étant supposé fixe sur sa première surface de révolution, frappe le dièdre au point A₁ et se réfléchit au point B1 sur la face 22 pour donner naissance au faisceau réfléchi R1. Il a alors été constaté que le faisceau réfléchi R1 s'est décalé d'un angle orienté a1, égal à deux fois l'angle orienté a0, par rapport au faisceau réfléchi R, et la deuxième surface de révolution (le long d'une génératrice de laquelle s'étend le faisceau réfléchi) est alors le même cylindre.

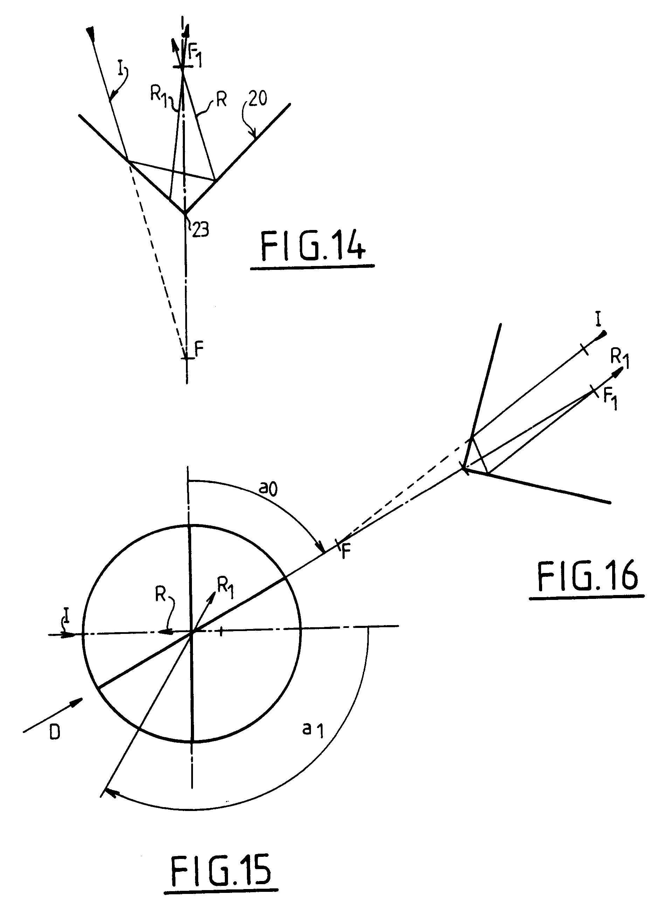

Dans le cas selon l'invention où la première surface de révolution est un cône de sommet F (figure 14), le faisceau réfléchi R se situe sur un cône dont le sommet F1 est symétrique du sommet F par rapport à l'arête 23 du dièdre. Lorsque ce dernier tourne autour de son axe de rotation d'un angle orienté choisi a0, le faisceau incident I, fixe sur sa surface de révolution, donne naissance à un faisceau réfléchi R1 situé sur la même surface de révolution que le faisceau réfléchi R mais décalé de celui-ci d'un angle orienté a1 égal à deux fois l'angle orienté a0.

Il a également été constaté, dans l'un ou l'autre des types de surfaces de révolution, que lorsque le faisceau incident se déplace sur sa surface de révolution d'un angle orienté donné, le dièdre étant fixe, le faisceau réfléchi se déplace consécutivement sur sa surface de révolution correspondante d'un angle orienté égal à l'opposé de l'angle orienté donné.

En conséquence,
si le dièdre est mobile entre une première position et une deuxième position, espacée de la première d'un angle orienté choisi a0, et
si le faisceau incident prend sur sa surface de révolution correspondante deux emplacements associés respectivement aux première et deuxième positions du dièdre, le deuxième emplacement étant décalé du premier d'un angle orienté a1 égal au double dudit angle orienté choisi a0,
alors le faisceau réfléchi reste au même emplacement sur sa surface de révolution correspondante dans les deux positions du dièdre.

Ceci peut se généraliser encore de la façon suivante. Si le dièdre est déplacé continûment avec une vitesse angulaire algébrique choisie v0, et
si l'un des faisceaux incident et réfléchi est déplacé sur la surface de révolution correspondante à une vitesse angulaire algébrique v1 égale sensiblement au double de la vitesse algébrique angulaire choisie v0 (dans le même sens), alors
l'autre faisceau reste sensiblement fixe sur sa surface de révolution. C'est là le principe du joint tournant.

Considérons maintenant le cas du commutateur selon l'état de la technique représenté sur les figures 1 et 2.

Lorsque le dièdre est dans sa première position, l'axe du faisceau d'entrée et donc l'axe du faisceau incident est l'axe 121-1 et l'axe du faisceau réfléchi, donc du faisceau de sortie, est l'axe 123-1. Par contre, lorsque le dièdre est commuté dans sa deuxième position décalée de la première d'un angle orienté a0 égal à la moitié de l'angle a1-1, l'axe du faisceau réfléchi, et par conséquent l'axe du faisceau de sortie, est l'axe 125-1. Si le dièdre est commuté dans sa troisième position, l'axe du faisceau réfléchi, et par conséquent l'axe du faisceau de sortie, est l'axe 127-1.

On a ainsi réalisé de façon simple un commutateur à une fibre d'entrée et trois fibres de sortie.

Considérons maintenant le cas selon l'invention des deux commutateurs distributeurs illustrés sur les figures 3 à 8.

Dans la première position du dièdre, le faisceau d'entrée arrivant selon l'axe d'entrée 101, donne naissance après réfraction sur le dioptre 25, au faisceau incident 8 qui, après réflexion, produit le faisceau réfléchi 9, lequel se réfléchit sur le miroir 26 pour générer un autre faisceau réfléchi 90 qui, après réfraction sur le dioptre 27, fournit le faisceau de sortie selon l'axe 113. L'autre faisceau d'entrée, selon l'axe d'entrée 109, fournira, après un parcours analogue, un faisceau de sortie selon l'axe 115.

Lorsque le dièdre est commuté dans sa deuxième position, les axes d'entrée des deux faisceaux d'entrée étant inchangés, l'axe de sortie du premier faisceau d'entrée est cette fois-ci l'axe 115 tandis que l'axe de sortie du deuxième faisceau d'entrée est cette fois-ci l'axe 113. Dans cette deuxième position, l'homme de l'art remarquera que la double réflexion peut se réduire à un cas dégénéré d'une réflexion unique sur l'arête du dièdre, si le pinceau lumineux est suffisamment fin.

Si le dièdre est déplacé continûment en rotation à une vitesse prédéterminée, ce dispositif permet alors de distribuer les deux faisceaux d'entrée alternativement selon l'un ou l'autre des faisceaux de sortie.

Considérons maintenant le cas selon l'invention des deux joints tournants illustrés sur les figures 9 et 10.

Les moyens moteurs 5 entraînent en rotation la première partie 10 à une vitesse angulaire donnée et, simultanément et de façon synchronisée, par l'intermédiaire du réducteur de vitesse 52, la douille 3 à une vitesse angulaire sensiblement égale à la moitié de la vitesse angulaire de la première partie. En conséquence, bien que le premier faisceau d'entrée ait son axe 101 tournant sur la première surface de révolution, l'axe 113 du premier faisceau de sortie est inchangé sur sa surface de révolution de sortie. Il en est de même en ce qui concerne l'axe d'entrée 109 du deuxième faisceau d'entrée et l'axe de sortie 115 du deuxième faisceau de sortie. Il convient de remarquer ici que les vitesses de rotation ne sont limitées que par le type de paliers choisis et la qualité des engrenages.

On conçoit ici aisément que la précision sur le rapport des vitesses de rotation du dièdre et de la partie mobile soit un critère important afin que les axes d'entrée et de sortie se correspondent pendant le fonctionnement du joint tournant. Cette précision est ici de l'ordre de 1 minute d'arc par demi-tour mais on peut considérer que le rapport des vitesses est égal exactement à 2 sur un tour complet.

Bien entendu, les parties 10 et 11 peuvent comprendre chacune plusieurs autres passages, en un nombre égal, un passage de l'une des parties constituant un passage d'entrée (ou de sortie), le passage optiquement correspondant de l'autre des parties constituant alors un passage de sortie (respectivement d'entrée). On réalise ainsi de façon simple des joints tournants multi-fibres. Certains d'entre eux présentent des première et deuxième parties situées du même côté du dièdre.

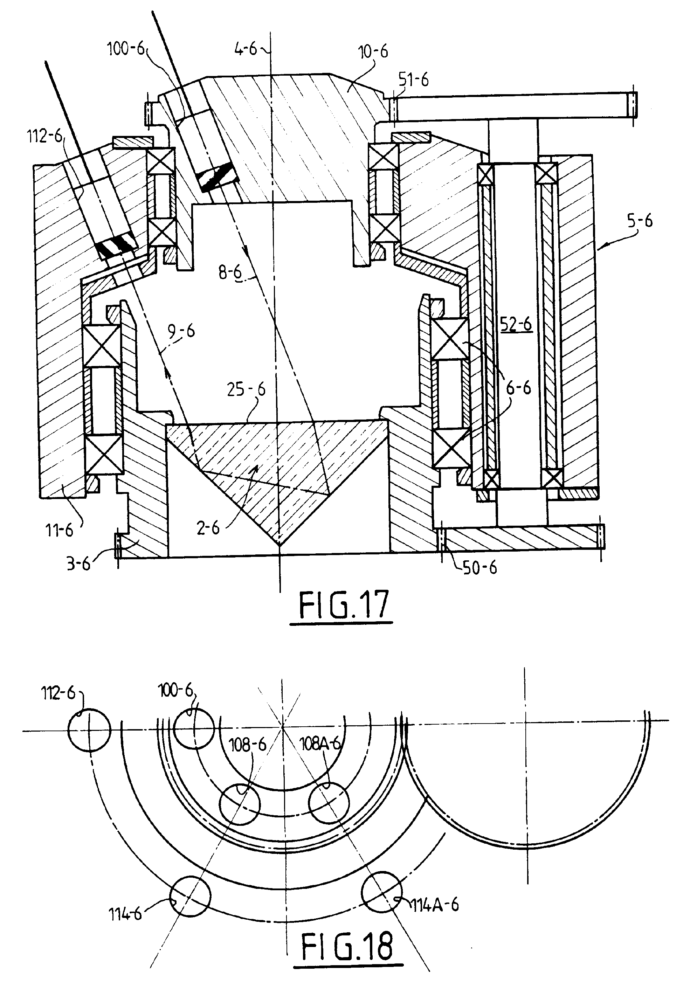

Un exemple de réalisation d'un tel joint tournant multi-fibres dont les première et deuxième sont situées du même côté du dièdre est représenté partiellement en coupe longitudinale sur la figure 17 et partiellement en vue de dessus sur la figure 18.

Dans ce mode de réalisation, les trois passages d'entrée 100-6, 108-6, 108A-6, de la première partie mobile 10-6 débouchent du côté de la concavité réfléchissante du dièdre 2-6. Il en est de même pour respectivement les trois passages de sortie 112-6, 114-6, 114A-6 de la deuxième partie fixe 11-6. Le bloc optique de ce joint tournant, monté dans la douille 3-6, est identique à celui du mode de réalisation des Fig. 1 et 2. Les trois faisceaux d'entrée 8-6 sont situés sur un cône et les trois faisceaux de sortie correspondants 9-6 sont situés également sur un cône, parallèle à celui des faisceaux d'entrée.

Chaque faisceau d'entrée et de sortie subit une réfraction au passage du dioptre plan 25-6. On peut alors considérer, ainsi que cela a déjà été précisé ci-avant, que ce dioptre plan constitue également dans ce mode de réalisation les moyens de déviation de faisceau lumineux bien que cette déviation soit minime en raison de l'inclinaison des faisceaux d'entrée et de sortie.

Il est enfin nécessaire, quel que soit le mode de réalisation et dans le cas où des faisceaux se croisent au sein du bloc optique, que le matériau transparent de celui-ci soit optiquement linéaire.

L'invention n'est pas limitée aux modes de réalisation ci-dessus décrits mais en embrasse toutes les variantes, notamment les suivantes :
- très généralement, à partir d'une pluralité de faisceaux incidents, tous situés sur la première surface de révolution, on peut obtenir une pluralité de faisceaux réfléchis correspondants, tous situés sur la deuxième surface de révolution,
- plus généralement encore le support peut recevoir en outre au moins un autre faisceau incident situé sur une autre première surface de révolution, homothétique de la première surface de révolution, ce qui permet d'obtenir au moins un autre faisceau réfléchi correspondant, situé sur une autre deuxième surface de révolution, homothétique de la deuxième surface de révolution;

le terme "homothétique" signifie ici que deux surfaces de révolution peuvent être de même type ou bien d'un type différent (cylindre et cône);
- le nombre de faisceaux incidents dépend uniquement des dimensions du dispositif mécano-optique, et tout faisceau incident sensiblement parallèle convient, en particulier un faisceau laser;
- dans le cas où le support reçoit une pluralité de faisceaux d'entrée, à travers respectivement une pluralité de passages d'entrée, le support comporte alors un nombre de passages de sortie de ces faisceaux lumineux au moins égal au nombre de passages d'entrée et le dièdre est susceptible alors de prendre plusieurs positions pour assurer, par commutation ou distribution, une correspondance optique pour chaque faisceau lumineux entre un passage d'entrée et un passage de sortie au moins;
- en vertu du principe de retour inverse de la lumière, les faisceaux incidents décrits pourraient être les faisceaux réfléchis et inversement;
- on pourrait concevoir que le dièdre soit constitué simplement de deux miroirs orthogonaux; il faudrait alors cependant prévoir des moyens de déviation lumineux et des moyens de réflexion secondaire adaptés;
- on pourrait également concevoir que le dièdre soit mobile en rotation autour d'un axe différent de son axe de symétrie, ou bien même que ce dièdre ne soit symétrique par rapport à aucun plan perpendiculaire à son plan bissecteur. Dans ce cas, il faudrait que ses diverses positions ainsi que son positionnement dans le support soient convenablement choisis pour pouvoir autoriser la double réflexion du faisceau incident. Cependant, pour un joint tournant, il est nécessaire de prévoir un dièdre symétrique, qui peut être par exemple une partie d'un dièdre non symétrique.

Bien entendu, certains des moyens décrits ci-dessus peuvent être omis dans les variantes où ils ne servent pas.

## Revendications

1. Dispositif mécano-optique, comprenant un support (1), un élément formant dièdre réflecteur (20), sensiblement droit, mobile à rotation relativement au support (1), autour d'un axe de rotation (4) sensiblement contenu dans le plan bissecteur du dièdre, et sensiblement orthogonal à son arête, des moyens d'entrée (10) pour appliquer à l'élément formant dièdre (20) au moins un faisceau incident sensiblement parallèle (8), selon un axe d'incidence situé du côté de sa concavité réfléchissante, de sorte qu'il se produit une double réflexion du faisceau incident, et des moyens de sortie (11) pour recueillir le faisceau ayant subi cette double réflexion comme faisceau de sortie, caractérisé en ce que lesdits moyens d'entrée (10) sont agencés de façon que ledit faisceau incident (8) soit appliqué sur ledit diedre selon un axe d'incidence s'étendant selon une génératrice d'un premier cône de révolution autour de cet axe de rotation (4), donnant ainsi lieu à un faisceau réfléchi (9) par la concavité réfléchissante qui s'étend le long d'une génératrice d'un deuxième cône de révolution autour dudit axe de rotation, les sommets respectifs des deux cônes étant symétriques par rapport à l'arête (23) de l'élément formant dièdre, et en ce que lesdits moyens de sortie (11) sont agencés de façon à recueillir ledit faisceau (9) ainsi reflechi par ledit dièdre le long d'une génératrice dudit deuxieme cône de révolution.

2. Dispositif selon la revendication 1, caractérisé en ce que l'élément formant dièdre est sensiblement symétrique et en ce que l'axe de rotation est sensiblement confondu avec son axe de symétrie.

3. Dispositif selon la revendication 1 ou 2, caractérisé en ce que l'élément formant dièdre (20) est intégré à un bloc optique (2), constitué d'un matériau transparent (24), d'indice de réfraction choisi, ce bloc optique (2) étant mobile à rotation dans le support (1) autour dudit axe de rotation, et deux de ses faces définissant le dièdre.

4. Dispositif selon les revendications 2 et 3 prises en combinaison, caractérisé en ce que le bloc optique comprend un prisme droit dont la base est un triangle isocèle, raccordé à un corps de révolution (28) autour de l'axe de rotation, ce bloc optique étant fixé dans une douille (3) montée tournante dans le support (1).

5. Dispositif selon l'une des revendications 1 à 4, caractérisé en ce qu'il comprend en outre des moyens moteurs (5) capables de déplacer l'élément formant dièdre (20) en rotation relativement au support (1).

6. Dispositif selon les revendications 4 et 5 prises en combinaison, caractérisé en ce que les moyens moteurs (5) comprennent un pignon denté (50) situé sur le pourtour de la douille (3).

7. Dispositif selon l'une des revendications précédentes, caractérisé en ce que les moyens d'entrée (10) comportent plusieurs organes d'entrée (70) traitant une pluralité de faisceaux incidents, tous situés sur le premier cône de révolution, ce qui permet d'obtenir une pluralité de faisceaux réfléchis correspondants, tous situés sur le deuxième cône de révolution.

8. Dispositif selon l'une des revendications précédentes, caractérisé en ce que les moyens d'entrée (10) appliquent au moins un autre faisceau incident situé sur un autre premier cône de révolution, homothétique du premier cône de révolution, ce qui permet d'obtenir au moins un autre faisceau réfléchi correspondant, situé sur un autre deuxième cône de révolution, homothétique du deuxième cône de révolution.

9. Dispositif selon l'une des revendications précédentes, caractérisé en ce que l'élément formant dièdre (20) est mobile entre une première position et au moins une deuxième position, espacée de la première d'un angle orienté choisi (a0),
en ce que l'un des faisceaux incident et réfléchi reste au même emplacement sur son cône de révolution correspondant, dans les deux positions de l'élément formant dièdre (20),
et en ce que l'autre faisceau prend, sur son cône de révolution correspondant, deux emplacements au moins correspondant auxdites première et deuxième positions de l'élément formant dièdre, le deuxième emplacement étant décalé du premier d'un angle orienté (a1) égal au double dudit angle orienté choisi.

10. Dispositif selon la revendication 9, caractérisé en ce que les moyens d'entrée/sortie comprennent :
- une optique d'entrée (10) pour appliquer au moins un faisceau d'entrée destiné à fournir ledit faisceau (8) incident sur ledit élément formant dièdre (20), selon ledit axe d'incidence, le faisceau d'entrée possédant un axe d'entrée situé sur une surface d'entrée correspondant au premier cône de révolution, et
- une optique de sortie (11) pour délivrer au moins un faisceau de sortie à partir du faisceau (9) réfléchi par l'élément formant dièdre, le faisceau de sortie possédant un axe de sortie situé sur une surface de sortie correspondant audit deuxième cône de révolution,
et en ce que l'un des faisceaux d'entrée et de sortie reste au même endroit sur sa surface correspondante, dans les deux positions de l'élément formant dièdre, tandis que l'autre faisceau occupe sur sa surface correspondante deux endroits correspondant respectivement auxdites première et deuxième positions de l'élément formant dièdre.

11. Dispositif selon l'une des revendications 3 et 4 prise en combinaison avec la revendication 10, caractérisé en ce que les optiques d'entrée (10) et de sortie (11) sont intégrées au bloc optique (2).

12. Dispositif selon l'une des revendications 10 et 11, caractérisé en ce que l'optique d'entrée (10) comprend des premiers moyens de déviation de faisceau lumineux (25).

13. Dispositif selon l'une des revendications 10 à 12, caractérisé en ce que l'optique de sortie (11) comprend des deuxièmes moyens de déviation de faisceau lumineux (27).

14. Dispositif selon l'une des revendications 10 à 13, caractérisé en ce que en ce que l'une des deux optiques d'entrée (10) et de sortie (11) comprend en outre des moyens de réflexion secondaires (26) tournés vers la concavité réfléchissante de l'élément formant dièdre (20), et coopérant avec elle pour l'un des faisceaux incident et réfléchi, respectivement.

15. Dispositif selon l'une des revendications 10 à 14, caractérisé en ce que la surface d'entrée est une surface de révolution autour dudit axe de rotation (4), ayant l'axe d'entrée pour génératrice,
en ce que la surface de sortie est une surface de révolution autour dudit axe de rotation (4), ayant l'axe de sortie pour génératrice,
et en ce que le deuxième endroit est décalé du premier d'un angle orienté égal à deux fois l'angle orienté choisi.

16. Dispositif selon la revendication 15, caractérisé en ce que l'axe d'entrée et/ou l'axe de sortie est(sont) incliné(s) par rapport à l'axe de rotation (4).

17. Dispositif selon la revendication 15, caractérisé en ce que l'axe d'entrée et/ou de sortie (est) (sont) parallèle(s) à l'axe de rotation (4).

18. Dispositif selon l'une des revendications 10 à 17, caractérisé en ce que le faisceau d'entrée atteint l'optique d'entrée d'un côté de l'élément formant dièdre et en ce que le faisceau de sortie quitte l'optique de sortie du même côté.

19. Dispositif selon l'une des revendications 10 à 17, caractérisé en ce que le faisceau d'entrée atteint l'optique d'entrée d'un côté de l'élément formant dièdre et en ce que le faisceau de sortie quitte l'optique de sortie de l'autre côté.

20. Dispositif selon l'une des revendications 3 et 4, prises en combinaison avec l'une des revendications 15 à 19, caractérisé en ce que le bloc optique (2) comprend une surface plane (25;26) opposée à ladite concavité réfléchissante et formant un dioptre plan pour les faisceaux d'entrée et de sortie.

21. Dispositif selon l'une des revendications 3 et 4, prises en combinaison avec les revendications 12 à 16 et 19, caractérisé en ce que les premier et deuxième moyens de déviation comprennent un disque (25-2) opposé à la concavité réfléchissante de l'élément formant dièdre, ainsi qu'un anneau (27-2) parallèle au disque, et situé au voisinage de ladite concavité réfléchissante, ledit disque et ledit anneau appartenant au bloc optique et formant dioptres plans, et en ce que les moyens de réflexion secondaires comprennent un miroir annulaire (26-2) formé au contact dudit disque.

22. Dispositif selon l'une des revendications 3 et 4, prise en combinaison avec les revendications 12 à 15, 17 et 19, caractérisé en ce que les premier et deuxième moyens de déviation comprennent des dioptres courbes (25-3,27-3) du bloc optique,
et en ce que les moyens de réflexion secondaire comprennent un miroir discoïdal plan (26-3) formé sur le bloc optique à l'opposé de la concavité réfléchissante.

23. Dispositif selon l'une des revendications 10 à 22, caractérisé en ce que les moyens d'entrée/sortie comportent au moins un premier (100) et un deuxième (112) passages fixes, agencés pour que, dans la première position de l'élément formant dièdre, l'axe de l'un de ces deux passages constitue ledit axe d'entrée, l'axe de l'autre passage constituant ledit axe de sortie, ainsi qu'un troisième passage fixe (114) dont l'axe est décalé de l'axe du deuxième passage d'un angle orienté égal sensiblement au double de l'angle orienté choisi, de sorte que l'un des axes des premier et troisième passages constitue, dans la deuxième position de l'élément formant dièdre, ledit axe d'entrée, l'autre axe constituant ledit axe de sortie.

24. Dispositif selon l'une des revendications 21 et 22 prises en combinaison avec la revendication 23, caractérisé en ce que le premier passage (100) débouche du côté de l'une des deux surfaces convexe et concave de l'élément formant dièdre, et en ce que les deuxième et troisième passages (112, 114) débouchent du côté de l'autre surface.

25. Dispositif selon l'une des revendications 23 et 24, caractérisé en ce que les moyens d'entrée/sortie (10,11) comportent au moins un autre passage, angulairement décalé par rapport au troisième passage et correspondant à au moins une troisième position de l'élément formant dièdre.

26. Dispositif selon l'une des revendications 23 à 25, prise en combinaison avec l'une des revendications 7 et 8, caractérisé en ce que les moyens d'entrée/sortie comprennent une pluralité de passages d'entrée, respectivement pour une pluralité de faisceaux d'entrée, et un nombre de passages de sortie de faisceaux lumineux au moins égal au nombre de passages d'entrée, et en ce que l'élément formant dièdre (20) est susceptible de prendre plusieurs positions pour assurer une correspondance optique pour chaque faisceau lumineux entre un passage d'entrée et un passage de sortie au moins.

27. Dispositif selon la revendication 24, caractérisé en ce que les axes des deuxième (112) et troisième (114) passages sont orienté choisi étant égal à π/2 radians.

28. Dispositif selon les revendications 26 et 27 prises en combinaison, caractérisé en ce que les moyens d'entrée/sortie traitent deux faisceaux d'entrée, et comportent un quatrième passage dont l'axe est symétrique de celui du premier passage par rapport à l'axe de rotation, et formant avec le premier passage une première paire de passages tandis que les deuxième et troisième passages forment une deuxième paire de passages, en ce que le plan bissecteur de l'élément formant dièdre constitue, dans ladite première position, plan de symétrie pour les quatre axes des quatre passages, et les contient dans ladite deuxième position, de sorte que chaque faisceau lumineux entre par un passage d'une des deux paires et ressort par un passage de l'autre paire, les deux faisceaux empruntant des passages différents.

29. Dispositif selon l'une des revendications 24 à 28, caractérisé en ce que l'élément formant dièdre (20) est déplacé continûment en rotation à une vitesse prédéterminée, ce qui permet de distribuer les faisceaux d'entrée alternativement selon l'un ou l'autre des axes de sortie.

30. Dispositif selon l'une des revendications 1 à 9, prise en combinaison avec la revendication 2, caractérisé en ce que l'élément formant dièdre (20) est déplacé continûment avec une vitesse angulaire algébrique choisie (vO),
en ce que l'un des faisceaux incident et réfléchi est déplacé quasi simultanément, sur le cône de révolution correspondant à une vitesse angulaire algébrique égale sensiblement au double de la vitesse angulaire choisie, ce qui permet à l'autre faisceau de rester sensiblement fixe sur son cône de révolution.

31. Dispositif selon la revendication 30, caractérisé en ce que les moyens d'entrée/sortie comportent une première (10-6) et une deuxième (11-6) partie possédant chacune un passage, l'une des première et deuxième parties étant fixe dans le support, tandis que l'autre est mobile à rotation dans le support autour de l'axe de rotation et est susceptible d'être déplacée continûment dans le support avec une vitesse angulaire algébrique (v1) sensiblement égale au double de la vitesse angulaire algébrique choisie (vO),
et en ce que l'élément formant dièdre (2-6) est positionné dans le support pour assurer une correspondance optique entre le passage de la première partie et le passage de la deuxième partie, quelle que soit la position de cet élément formant dièdre, de sorte qu'un faisceau lumineux entre par le passage d'une des deux parties et sort par le passage de l'autre partie.

32. Dispositif selon l'une des revendications 7 et 8 prise en combinaison avec la revendication 31, caractérisé en ce que chaque partie (10-6,11-6) comprend un même nombre de passages, ce nombre étant supérieur ou égal à deux, un passage de l'une des parties constituant un passage d'entrée, le passage optiquement correspondant de l'autre des parties constituant alors un passage de sortie.

33. Dispositif selon l'une des revendications 31 et 32 prise en combinaison avec la revendication 18, caractérisé en ce que tous les passages débouchent du côté de la concavité réfléchissante de l'élément formant dièdre.

34. Dispositif selon l'une des revendications 31 et 32 prise en combinaison avec la revendication 19, caractérisé en ce que le(s) passage(s) de l'une des deux parties débouche(nt) du côté de l'une des surfaces concave et convexe de l'élément formant dièdre tandis que le(s) passage(s) de l'autre partie débouche(nt) du côté de l'autre surface.

35. Dispositif selon l'une des revendications 31 à 34 prise en combinaison avec la revendication 6, caractérisé en ce que les moyens moteurs (5) comprennent un autre pignon denté (51), situé sur le pourtour de celle des première et deuxième parties qui est mobile, et un réducteur de vitesse (52) coopérant avec le pignon denté (50) situé sur le pourtour de la douille et cet autre pignon denté (51).

36. Dispositif selon l'une des revendications 23 à 35, caractérisé en ce que les moyens d'entrée/sortie (7) comprennent un organe d'entrée (70) inséré dans chaque passage d'entrée et un organe de sortie (71) inséré dans chaque passage de sortie, ces organes étant propres à solidariser les moyens d'entrée/sortie au support.

37. Dispositif selon la revendication 36, caractérisé en ce que les moyens d'entrée/sortie sont des fibres optiques et en ce que chaque organe d'entrée comprend un collimateur (700).

38. Dispositif selon la revendication 37, caractérisé en ce que chaque organe de sortie comprend un collimateur (700).

39. Dispositif selon l'une des revendications précédentes, prise en combinaison avec la revendication 3, caractérisé en ce que le matériau transparent du bloc optique est optiquement linéaire.

## Patentansprüche

1. Mechanisch-optische Vorrichtung, bestehend aus einem Halter (1), einem ein im wesentlichen rechtwinkliges reflektierendes Dieder (20) bildenden Element, das bezüglich des Halters (1) um eine Drehachse (4) drehbar ist, die im wesentlichen in der winkelhalbierenden Ebene des Dieders liegt und zu seiner Kante im wesentlichen rechtwinklig ist, Eingangseinrichtungen (10), durch die wenigstens ein im wesentlichen paralleles einfallendes Strahlenbündel (8) an das Diederelement (20) in einer auf der Seite seines reflektierenden Hohlraums gelegenen Einfallsachse angelegt wird, so daß das einfallende Bündel zweimal reflektiert wird, und Einrichtungen (11), zum Aufnehmen des zweimal reflektierten Bündels als Ausgangsbündel,
dadurch **gekennzeichnet,**
daß die Eingangseinrichtungen (10) so ausgebildet sind, daß das einfallende Bündel (8) an dieses Dieder in einer Einfallsachse angelegt wird, die sich längs einer Erzeugenden eines ersten Kreiskegels erstreckt, dessen Rotationsachse die Drehachse (4) ist, so daß ein durch den reflektierende Hohlraum reflektiertes Bündel (9) entsteht, das sich längs einer Erzeugenden eines zweiten Kreiskegels mit dieser Drehachse als Rotationsachse erstreckt, wobei die Spitzen der beiden Kegel bezüglich der Kante (23) des Diederelements symmetrisch sind, und daß die Ausgangseinrichtungen (11) so ausgebildet sind, daß sie das auf diese Weise durch das Dieder reflektierte Bündel (9) auf einer Erzeugenden des zweiten Kreiskegels empfangen.

2. Vorrichtung nach Anspruch 1,
dadurch **gekennzeichnet**,
daß das Diederelement im wesentlichen symmetrisch ist und daß die Drehachse mit seiner Symmetrieachse im wesentlichen zusammenfällt.

3. Vorrichtung nach Anspruch 1 oder 2,
dadurch **gekennzeichnet**,
daß das Diederelement (20) in einen optischen Block (2) integriert ist, der aus einem transparenten Werkstoff (24) mit einer bestimmten Brechzahl besteht, wobei der optische Block (2) in dem Halter (1) um diese Drehachse drehbar ist und zwei seiner Flächen das Dieder bilden.

4. Vorrichtung nach den Ansprüchen 2 und 3 zusammen,
dadurch **gekennzeichnet**,
daß der optische Block ein rechtwinkliges Prisma umfaßt, dessen Grundfläche ein gleichschenkliges Dreieck ist, und das an einen Rotationskörper (28) mit der Drehachse als Rotationsachse anschließt, wobei dieser optische Block in einer Buchse (3) befestigt ist, die im Halter (1) drehbar montiert ist.

5. Vorrichtung nach einem der Ansprüche 1 bis 4,
dadurch **gekennzeichnet**,
daß sie außerdem Antriebseinrichtungen (5) umfaßt, die das Diederelement (20) bezüglich des Halters (1) in Drehung versetzen können.

6. Vorrichtung nach an den Ansprüchen 4 und 5 zusammen,
dadurch **gekennzeichnet**,
daß die Antriebseinrichtungen (5) ein Zahnrad (50) umfassen, das am Umfang der Buchse (3) angeordnet ist.

7. Vorrichtung nach einem der vorhergehenden Ansprüche,
dadurch **gekennzeichnet**,
daß die Eingangseinrichtungen (10) mehrere Eingangsorgane (70) umfassen, die mehrere einfallende Bündel behandeln, die alle auf dem ersten Kreiskegel gelegen sind, so daß mehrere entsprechende reflektierte Bündel gebildet werden, die alle auf dem zweiten Kreiskegel liegen.

8. Vorrichtung nach einem der vorhergehenden Ansprüche,
dadurch **gekennzeichnet**,
daß die Eingangseinrichtungen (10) wenigstens ein anderes einfallendes Bündel anlegen, das auf einem anderen ersten Kreiskegel liegt, der zum ersten Kreiskegel homothetisch ist, so daß man wenigstens ein anderes entsprechendes reflektiertes Bündel erhalten kann, das auf einem anderen zweiten Kreiskegel liegt, der zum zweiten Kreiskegel homothetisch ist.

9. Vorrichtung nach einem der vorhergehenden Ansprüche,
dadurch **gekennzeichnet**,
daß das Diederelement (20) zwischen einer ersten Stellung und wenigstens einer zweiten Stellung beweglich ist, die von der ersten um einen bestimmten Drehwinkel (a0) entfernt ist,
daß eines der Bündel, das einfallende oder das reflektierte Bündel, in den beiden Stellungen des Diederelements (20) auf seinem entsprechenden Kreiskegel an der gleichen Stelle bleibt, und
daß das andere Bündel auf seinem entsprechenden Kreiskegel wenigstens zwei Stellen einnimmt, die der ersten und der zweiten Stellung des Diederelements entsprechen, wobei die zweite Stelle gegen die erste um einen Drehwinkel (a1) entfernt ist, der gleich dem Zweifachen dieses bestimmten Drehwinkels ist.

10. Vorrichtung nach Anspruch 9,
dadurch **gekennzeichnet**,
daß die Eingangs/Ausgangseinrichtungen umfassen:
- einen optischen Eingang (10), durch den wenigstens ein Eingangsbündel, das das einfallende Bündel (8) liefern soll, an das Diederelement (20) in dieser Einfallsachse angelegt wird, wobei das Eingangsbündel eine Eingangsachse besitzt, die auf einer dem ersten Kreiskegel entsprechenden Eingangsfläche liegt, und
- einen optischen Ausgang (11), der ausgehend von dem das Diederelement reflektierten Bündel (9) wenigstens ein Ausgangsbündel bildet, das eine Ausgangsachse besitzt, die auf einer dem zweiten Kreiskegel entsprechenden Ausgangsfläche liegt, und
- daß das Eingangsbündel oder das Ausgangsbündel in den beiden Stellungen des Diederelements auf seiner entsprechenden Fläche an derselben Stelle bleibt, während das andere Bündel auf seiner entsprechenden Fläche zwei Stellen einnimmt, die der ersten und der zweiten Stellung des Diederelements entsprechen.

11. Vorrichtung nach einem der Ansprüche 3 und 4 in Kombination mit Anspruch 10,
dadurch **gekennzeichnet**,
daß die Eingangsoptik (10) und die Ausgangsoptik (11) in den optischen Block (2) integriert sind.

12. Vorrichtung nach einem der Ansprüche 10 und 11,
dadurch **gekennzeichnet**,
daß die Eingangsoptik (10) erste Einrichtungen zum Ablenken des Lichtbündels (25) besitzt.

13. Vorrichtung nach einem der Ansprüche 10 bis 12,
dadurch **gekennzeichnet**,
daß die Ausgangsoptik (11) zweite Einrichtungen zum Ablenken des Lichtbündels (27) besitzt.

14. Vorrichtung nach einem der Ansprüche 10 bis 13,
dadurch **gekennzeichnet**,
daß die Eingangsoptik (10) oder die Ausgangsoptik (11) außerdem sekundäre Reflexionseinrichtungen (26) besitzt, die dessen reflektierenden Hohlraum des Diederelements (20) zugewandt sind und bei einem der Bündel dem einfallenden oder dem reflektierten Bündel, mit diesem zusammenwirken.

15. Vorrichtung nach einem der Ansprüche 10 bis 14,
dadurch **gekennzeichnet**,
- daß die Eingangsfläche eine Rotationsfläche mit der Drehachse (4) als Rotationsachse ist, die die Eingangsachse zur Erzeugenden hat,
- daß die Ausgangsfläche eine Rotationsfläche mit der Drehachse (4) als Rotationsachse ist, die die Ausgangsachse zur Erzeugenden hat,
- und daß die zweite Stelle gegen die erste um einen Drehwinkel versetzt ist, der gleich dem Zweifachen des bestimmten Drehwinkels ist.

16. Vorrichtung nach Anspruch 15,
dadurch **gekennzeichnet**,
daß die Eingangsachse und/oder die Ausgangsachse gegen die Drehachse (4) geneigt ist bzw. sind.

17. Vorrichtung nach Anspruch 15,
dadurch **gekennzeichnet**,
daß die Eingangsachse und/oder die Ausgangsachse zur Drehachse (4) parallel ist bzw. sind.

18. Vorrichtung nach einem der Ansprüche 10 bis 17,
dadurch **gekennzeichnet**,
daß das Eingangsbündel in die Eingangsoptik auf einer Seite des Diederelements eintritt und daß das Ausgangsbündel die Ausgangsoptik auf derselben Seite verläßt.

19. Vorrichtung nach einem der Ansprüche 10 bis 17,
dadurch **gekennzeichnet**,
daß das Eingangsbündel in die Eingangsoptik auf einer Seite des Diederelements eintritt und daß das Ausgangsbündel die Ausgangsoptik auf der anderen Seite verläßt.

20. Vorrichtung nach einem der Ansprüche 3 und 4 in Kombination mit einem der Ansprüche 15 bis 19,
dadurch **gekennzeichnet**,
daß der optische Block (2) eine ebene Fläche (25; 26) umfaßt, die dem reflektierenden Hohlraum entgegengesetzt ist und ein ebenes Diopter für das Eingangsbündel und das Ausgangsbündel bildet.

21. Vorrichtung nach einem der Ansprüche 3 und 4 in Kombination mit den Ansprüchen 12 bis 16 und 19,
dadurch **gekennzeichnet**,
daß die erste und die zweite Ablenkeinrichtung eine Scheibe (25-2), die dem reflektierenden Hohlraum des Diederelements entgegengesetzt ist, sowie einen Ring (27-2) umfassen, der zur Scheibe parallel ist und in Nähe des reflektierenden Hohlraums gelegen ist, wobei die Scheibe und der Ring zum optischen Block gehören und ebene Diopter bilden, und daß die sekundären Reflexionseinrichtungen einen ringförmigen Spiegel (26-2) umfassen, der im Kontakt mit dieser Scheibe gebildet ist.

22. Vorrichtung nach einem der Ansprüche 3 und 4 in Kombination mit den Ansprüchen 12 bis 15, 17 und 19,
dadurch **gekennzeichnet**,
daß die erste und die zweite Ablenkeinrichtung aus gekrümmten Dioptern (25-3, 27-3) des optischen Blocks bestehen und daß die sekundären Reflexionseinrichtungen aus einem ebenen scheibenförmigen Spiegel (26-3) bestehen, der auf dem optischen Block auf der dem reflektierenden Hohlraum entgegengesetzten Seite gebildet ist.

23. Vorrichtung nach einem der Ansprüche 10 bis 22,
dadurch **gekennzeichnet**,
daß die Eingangs/Ausgangseinrichtungen wenigstens einen ersten feststehenden Kanal (100) und einen zweiten feststehenden Kanal (112), die so ausgebildet sind, daß die Achse einer dieser beiden Kanäle in der ersten Stellung des Diederelements die Eingangsachse bildet, wobei die Achse des anderen Kanals die Ausgangsachse bildet, sowie einen dritten feststehenden Kanal (114) umfassen, dessen Achse gegen die Achse des zweiten Kanals um einen Drehwinkel versetzt ist, der im wesentlichen gleich dem Zweifachen des bestimmten Drehwinkels ist, so daß eine der Achsen des ersten und des zweiten Kanals in der zweiten Stellung des Diederelements die Eingangsachse bildet, wobei die andere Achse die Ausgangsachse bildet.

24. Vorrichtung nach einem der Ansprüche 21 und 22 in Kombination mit Anspruch 23,
dadurch **gekennzeichnet,**
daß der erste Kanal (100) auf der Seite der konvexen oder konkaven Fläche des Diederelements ausmündet und daß der zweite Kanal (112) und der dritte Kanal (114) auf der Seite der anderen Fläche ausmünden.

25. Vorrichtung nach einem der Ansprüche 23 und 24,
dadurch **gekennzeichnet**,
daß die Eingangs/Ausgangseinrichtungen (10, 11) wenigstens einen anderen Kanal umfassen, der bezüglich des dritten Kanals winkelmäßig versetzt ist und wenigstens einer dritten Stellung des Diederelements entspricht.

26. Vorrichtung nach einem der Ansprüche 23 bis 25 in Kombination mit einem der Ansprüche 7 und 8,
dadurch **gekennzeichnet**,
daß die Eingangs/Ausgangseinrichtungen mehrere Eingangskanäle für mehrere Eingangsbündel und eine Anzahl von Lichtbündel-Ausgangskanälen von wenigstens gleich der Anzahl der Eingangskanäle umfassen und daß das Diederelement (20) mehrere Stellungen einnehmen kann, um bei jedem Lichtbündel zwischen einem Eingangskanal und wenigstens einem Ausgangskanal eine optische Übereinstimmung herzustellen.

27. Vorrichtung nach Anspruch 24,
dadurch **gekennzeichnet**,
daß die Achsen des zweiten Kanals (112) und des dritten Kanals (114) bezüglich der Drehachse symmetrisch angeordnet sind, wobei der bestimmte Drehwinkel gleich η/2 Rad ist.

28. Vorrichtung nach einem der Ansprüche 26 und 27 zusammen,
dadurch **gekennzeichnet**,
daß die Eingangs/Ausgangseinrichtungen zwei Eingangsbündel verarbeiten und einen vierten Kanal besitzen, dessen Achse bezüglich der Drehachse zu der des ersten Kanals symmetrisch ist und der mit dem ersten Kanal ein erstes Kanalpaar bildet, während der zweite Kanal und der dritte Kanal ein zweites Kanalpaar bilden, und daß die winkelhalbierende Ebene des Diederelements in der ersten Stellung die Symmetrieebene für die vier Achsen der vier Kanäle bildet und diese in der zweiten Stellung enthält, so daß jedes Lichtbündel über einen Kanal eines der beiden Paare eintritt und über einen Kanal des anderen Paars austritt, wobei die beiden Bündel verschiedene Kanäle nehmen.

29. Vorrichtung nach einem der Ansprüche 24 bis 28,
dadurch **gekennzeichnet**,
daß das Diederelement (20) kontinuierlich mit einer vor bestimmten Geschwindigkeit in Drehung versetzt ist, so daß die Eingangsbündel abwechselnd auf die eine oder die andere Ausgangsachse gelegt werden können.

30. Vorrichtung nach einem der Ansprüche 1 bis 9 in Kombination mit Anspruch 2,
dadurch **gekennzeichnet**,
daß das Diederelement (20) kontinuierlich mit einer bestimmten algebraischen Winkelgeschwindigkeit (v0) bewegt wird, und
daß das einfallende Bündel oder das reflektierte Bündel quasi gleichzeitig auf dem entsprechenden Kreiskegel mit einer algebraischen Winkelgeschwindigkeit bewegt wird, die im wesentlichen gleich dem zweifachen der bestimmten Winkelgeschwindigkeit ist, so daß das andere Bündel auf seinem Kreiskegel im wesentlichen feststehend bleiben kann.

31. Vorrichtung nach Anspruch 30,
dadurch **gekennzeichnet**,
daß die Ausgangs/Eingangseinrichtungen einen ersten Teil (10-6) und einen zweiten Teil (11-6) umfassen, die jeweils einen Kanal besitzen, wobei der erste oder der zweite Teil im Halter feststehend ist, während der andere Teil im Halter um die Drehachse drehbar ist und kontinuierlich mit einer algebraischen Winkelgeschwindigkeit (v1) von im wesentlichen gleich dem Zweifachen der bestimmten algebraischen Winkelgeschwindigkeit (v0) bewegt werden kann,
und daß das Diederelement (2-6) im Halter so positioniert ist, daß bei jeder beliebigen Stellung dieses Diederelement eine optische Übereinstimmung zwischen dem Kanal des ersten Teils und dem Kanal des zweiten Teils besteht, so daß ein Lichtbündel über den Kanal eines der beiden Teile eintritt und über den Kanal des anderen Teils austritt.

32. Vorrichtung nach einem der Ansprüche 7 und 8 in Kombination mit Anspruch 31,
dadurch **gekennzeichnet**,
daß jeder Teil (10-6, 11-6) die gleiche Anzahl von Kanälen besitzt, wobei diese Anzahl größer oder gleich zwei ist und der Kanal einer der Teile einen Eingangskanal bildet, wobei der optisch übereinstimmende Kanal des anderen der Teile den Ausgangskanal bildet.

33. Vorrichtung nach einem der Ansprüche 31 und 32 in Kombination mit Anspruch 18,
dadurch **gekennzeichnet**,
daß alle Kanäle auf der Seite des reflektierenden Hohlraums des Diederelements ausmünden.

34. Vorrichtung nach einem Ansprüche 31 und 32 in Kombination mit Anspruch 19,
dadurch **gekennzeichnet**,
daß der bzw. die Kanäle einer der beiden Teile auf der Seite der konkaven Fläche oder der konvexen Fläche des Diederelements ausmünden, während der bzw. die Kanäle des anderen Teils auf der Seite der jeweils anderen Fläche ausmünden.

35. Vorrichtung nach einem der Ansprüche 31 bis 34 in Kombination mit Anspruch 6,
dadurch **gekennzeichnet**,
daß die Antriebseinrichtungen (5) ein anderes Zahnrad (51), das am Umfang desjenigen der Teile, die das erste und das zweite Teil bilden, angeordnet ist, das beweglich ist, und einen Drehzahlminderer (52) umfassen, der mit dem am Umfang der Buchse angeordneten Zahnrad (50) und diesem anderen Zahnrad (51) zusammenwirkt.

36. Vorrichtung nach einem der Ansprüche 23 bis 35,
dadurch **gekennzeichnet**,
daß die Ausgangs/Eingangseinrichtungen (7) ein in jedem Eingangskanal eingesetztes Eingangsorgan (70) und ein in jeden Ausgangskanal eingesetztes Ausgangsorgan (71) umfassen, wobei diese Organe die Eingangs/Ausgangseinrichtungen mit dem Halter fest verbinden können.

37. Vorrichtung nach Anspruch 36,
dadurch **gekennzeichnet**,
daß die Eingangs/Ausgangseinrichtungen Lichtleitfasern sind und daß jedes Eingangsorgan einen Kollimator (700) umfaßt.

38. Vorrichtung nach Anspruch 37,
dadurch **gekennzeichnet**,
daß jedes Ausgangsorgan einen Kollimator (700) umfaßt.

39. Vorrichtung nach einem der vorhergehenden Ansprüche in Kombination mit Anspruch 3,
dadurch **gekennzeichnet**,
daß der transparente Werkstoff des optischen Blocks optisch linear ist.

## Claims

1. A mechano-optical device, comprising a support (1), an element (20) forming a substantially straight reflecting dihedron which is rotatably movable relatively to the support (1) about an axis of rotation (4) substantially contained in the plane of bisection of the dihedron and substantially perpendicular to its ridge, inlet means (10) for applying to the element (20) forming the dihedron at least one substantially parallel incident beam (8) along an axis of incidence arranged to the side of its reflecting concavity, in such a manner as to produce a double reflection of the incident beam, and outlet means (11) for receiving the beam which has undergone this double reflection as an outlet beam, characterised in that the said inlet means (10) are arranged in such a manner that the said incident beam (8) is applied to the dihedron along an axis of incidence extending along a generatrix of a first cone of revolution around the said axis of rotation (4), thus giving place to a beam (9), reflected by the reflecting concavity, that extends along a generatrix of a second cone of revolution around the said axis of rotation, the respective apices of the two cones being symmetrical with respect to the ridge (23) of the dihedron forming element, and in that the said outlet means are arranged in such a manner as to receive the said beam (9) thus reflected by the said dihedron along a generatrix of the said second cone of revolution.

2. A device according to Claim 1, characterised in that the element (20) forming a dihedron is substantially symmetrical and in that the axis of rotation is substantially identical with its axis of symmetry.

3. A device according to Claim 1 or 2, characterised in that the element (20) forming a dihedron is integral with an optical block (2) formed of a transparent material (24) of a chosen refractive index, said optical block (2) being rotatable in the support (1) about said axis of rotation, and two of its faces defining the dihedron

4. A device according to Claims 2 and 3 in combination, characterised in that the optical block comprises a straight prism of which the base is an isosceles triangle, connected to a body of revolution (28) about the axis of rotation, the said optical block being fixed in a sleeve (3) mounted rotatably in the support (1).

5. A device according to any one of Claims 1-4, characterised in that it further comprises drive means (5) capable of rotatably displacing the dihedron forming element (20) relatively to said support (1).

6. A device according to both Claims 4 and 5 in combination, characterised in that the drive means (5) comprise a toothed pinion (50) located on the circumference of the sleeve (3).

7. A device according to one of the preceding claims, characterised in that the inlet means (10) comprises a plurality of inlet elements (70) handling a plurality of incident beams, all located on the first cone of revolution, which makes it possible to obtain a plurality of corresponding reflected beams, all located on the second cone of revolution.

8. A device according to one of the preceding claims, characterised in that the inlet means (10) applies at least one further incident beam located on a further first cone of revolution, which is homothetic with the first cone of revolution, which makes it possible to obtain at least one further corresponding reflected beam located on a further second cone of revolution, which is homothetic with the second cone of revolution.

9. A device according to one of the preceding claims, characterised in that the element forming a dihedron (20) is movable between a first position and at least one second position, spaced from the first by a chosen oriented angle (a0), in that one of the incident and reflected beams remains in the same position on its corresponding cone of revolution in the two positions of the element forming a dihedron (20).
and that the other beam assumes, on its corresponding cone of revolution, at least two positions corresponding to said first and second positions of the element forming a dihedron, the second position being offset from the first by an oriented angle (a1) equal to twice said chosen oriented angle.

10. A device according to Claim 11, characterised in that the inlet/outlet means comprise:
- an inlet optic (10) to apply at least one inlet beam intended to provide the said beam (8) incident on the element forming a dihedron (20), along said axis of incidence, the inlet beam having an inlet axis located on an inlet surface corresponding to the first cone of revolution, and
- an outlet optic (11) to deliver at least one outlet beam starting from the beam (9) reflected by the element forming a dihedron, the outlet beam having an outlet axis located on an outlet surface corresponding to said second cone of revolution.
and in that one of the inlet and outlet beams remains in the same place on its corresponding surface in the two positions of the element forming the dihedron, whereas the other beam occupies on its corresponding surface two positions corresponding respectively to said first and second positions of the element forming a dihedron.

11. A device according to one of Claims 3 and 4 in combination with Claim 10, characterised in that the inlet (10) and outlet (11) optics are integral with the optical block (2).

12. A device according to one of Claims 10 and 11, characterised in that the inlet optic (10) comprises first means means of light beam deviation (25).

13. A device according to one of Claims 10 to 12, characterised in that the outlet optic (11) comprises second means of light beam deviation (27).

14. A device according to one of Claims 10 to 13, characterised in that one of the two inlet (10) and outlet (11) optics comprises additionally secondary reflecting means (26) turned towards the reflecting concavity of the element forming the dihedron (20), and cooperating therewith for one of the incident and reflected beams respectively.

15. A device according to one of Claims 10 to 14, characterised in that the inlet surface is a surface of revolution about said axis of rotation (4), having the inlet axis for a generatrix,
in that the outlet surface is a surface of revolution about said axis of rotation (4), having the outlet axis for a generatrix,
and in that the second position is offset from the first by an oriented angle equal to twice the chosen oriented angle.

16. A device according to Claim 15, characterised in that the inlet axis and/or the outlet axis is (are) inclined relative to the axis of rotation (4).

17. A device according to Claim 15, characterised in that the inlet axis and/or the outlet axis (is) (are) parallel to the axis of rotation (4).

18. A device according to one of Claims 10 to 17, characterised in that the inlet beam reaches the inlet optic on one side of the element forming a dihedron and in that the outlet beam leaves the outlet optic on the same side.

19. A device according to one of Claims 10 to 17, characterised in that the inlet beam reaches the inlet optic on one side of the element forming a dihedron and in that the outlet beam leaves the outlet optic on the other side.

20. A device according to one of Claims 3 and 4, in combination with one of Claims 15 to 19, characterised in that the optical block (2) comprises a plane surface (25;26) opposite said reflecting concavity and forming a plane dioptre for the inlet and outlet beams.

21. A device according to one of Claims 3 and 4, in combination with Claims 12 to 16 and 19, characterised in that the first and second deviating means comprise a disc (25-2) opposite the reflecting concavity of the element forming a dihedron, together with a ring (27-2) parallel to the disc and located in the vicinity of said reflecting concavity, the said disc and the said ring forming part of the optical block and forming plane dioptres, and in that the secondary reflecting means comprise an annular mirror (26-2) formed in contact with said disc.

22. A device according to one of Claims 3 and 4, in combination with Claims 12 to 15, 17 and 19, characterised in that the first and second deviating means comprise curved dioptres (25-3, 27-3) of the optical block, and in that the secondary reflecting means comprise a plane discoidal mirror (26-3) formed on the optical block opposite the reflecting concavity.

23. A device according to one of Claims 10 to 22, characterised in that the inlet/outlet means comprise at least a first (100) and second (112) fixed passage, so arranged that, in the first position of the element forming a dihedron, the axis of one of these two passages forms said inlet axis, the axis of the other fixed passage forming said outlet axis, as well as a third fixed passage (114) whose axis is offset from the axis of the second passage by an oriented angle equal to substantially twice the chosen oriented angle, so that one of the axes of the first and third passages form, in the second position of the element forming a dihedron, said inlet axis, the other axis forming said outlet axis.

24. A device according to Claims 20 and 25, characterised in that said three passages (120-1, 122-1, 124-1) open on the side of the reflecting concavity of the element forming a dihedron.

25. A device according to one of Claims 23 and 24, characterised in that the inlet/outlet means (10,11) comprise at least one further passage, which is offset at an angle relative to the third passage and corresponding to at least a third position of the element forming a dihedron.

26. A device according to one of Claims 23 and 25 in combination with one of Claims 7 and 8, characterised in that the inlet/outlet means comprise a plurality of inlet passages, respectively for a plurality of inlet beams, and a number of outlet passages of light beams which is at least equal to the number of inlet passages, and in that the element forming a dihedron (20) is capable of assuming a plurality of positions in order to effect an optical correspondence for each light beam between at least one inlet passage and one outlet passage.

27. A device according to Claim 24, characterised in that the axes of the second (112) and third (114) passages are arranged symmetrically relative to the axis of rotation, the chosen oriented angle being equal to π/2 radians.

28. A device according to Claims 26 and 27 in combination, characterised in that the inlet/outlet means handles two inlet beams, and comprises a fourth passage whose axis is symmetrical with that of the first passage relative to the axis of rotation, and forming with the first passage a first pair of passages, whereas the second and third passages form a second pair of passages,
and in that the plane of bisection of the element forming a dihedron forms, in said first position, a plane of symmetry for the four axes of the four passages, and contains them in said second position, in such a manner that each light beam enters via one passage of one of the two pairs and exits via one passage of the other pair, the two beams using different passages.

29. A device according to one of Claims 24 to 28, characterised in that the element forming a dihedron (20) is continuously rotated at a predetermined speed, which makes it possible to distribute the inlet beams alternately along one or other of the outlet axes.

30. A device according to one of Claims 1 to 9 taken in combination with Claim 2, characterised in that the element forming a dihedron (20) is continuously moved at a chosen algebraic angular speed (v0),
in that one of the incident and reflected beans is moved almost simultaneously on the corresponding cone of revolution at an algebraic angular speed equal to substantially twice the chosen angular speed, which permits the other beam to remain substantially stationary on its cone of revolution.

31. A device according to Claim 30, characterised in that the inlet/outlet means comprise a first (10-6) and second (11-6) part, each having a passage, one of the first and second parts being fixed in the support, whereas the other is rotatable in the support about the axis of rotation and is capable of being moved continuously in the support at an algebraic angular speed (v1) substantially equal to twice the chosen algebraic angular speed (v0),
and in that the element forming a dihedron (2-6) is positioned in the support to effect an optical correspondence between the passage of the first part and the passage of the second part, whatever the position of this element forming a dihedron, so that a light beam enters via the passage of one of the two parts and exits via the passage of the other part.

32. A device according to one of Claims 7 and 8 in combination with Claim 1, characterised in that each part (10-6, 11-6) comprises a number of passages, this number being larger than or equal to two, a passage of one of the parts forming an inlet passage, the optically corresponding passage of the other of the parts then forming an outlet passage.

33. A device according to one of Claims 31 and 32 in combination with Claim 18, characterised in that all the passages open on to the side of the reflecting concavity of the element forming a dihedron.

34. A device according to one of Claims 31 and 32 in combination with Claim 19, characterised in that the passage(s) of one of the two parts open on to the side of one of the concave and convex surfaces of the element forming a dihedron, whereas the passage(s) of the other part opens on to the side of the other surface.

35. A device according to one of Claims 31 to 34 in combination with Claim 6, characterised in that the drive means (5) comprise a further toothed pinion (51) located on the circumference of whichever of the first and second parts is movable, and a reducing gear (52) cooperating with the toothed pinion (50) located on the circumference of the sleeve and this further toothed pinion (51).

36. A device according to one of Claims 23 to 35, characterised in that the inlet/outlet means (7) comprises an inlet element (70) inserted into each inlet passage and an outlet element (71) inserted into each outlet passage, these elements being intended to fix the inlet/outlet means to the support.

37. A device according to Claim 36, characterised in that the inlet/outlet means are optic fibres and in that each inlet element comprises a collimator (700).

38. A device according to Claim 37, characterised in that each outlet element comprises a collimator (700).

39. A device according to one of the preceding claims in combination with Claim 3, characterised in that the transparent material of the optical block is optically linear.
